# FASCICULE DE BREVET EUROPEEN

(11) **EP 1 094 654 B1**
(45) Date de publication et mention de la délivrance du brevet: **23.06.2004**
(21) Numéro de dépôt: 00402503.7
(22) Date de dépôt: 11.09.2000
(51) Int. Cl.: H04M 1/725, H04M 1/02, H04B 1/38

(54) **Equipement électronique portable et son mode d'utilisation**
Tragbares Elektronisches Gerät und Verfahren zu dessen Verwendung
Portable electronic equipment and method of using

(30) Priorité: 22.09.1999 FR 9911820
(43) Date de publication de la demande: 25.04.2001
(73) Titulaire: SAGEM SA, 75015 Paris (FR)
(72) Inventeur: Rieul, François, 95000 Cergy (FR); Porato, Marc, 60240 Lonconville (FR); Charbonnier, Philippe, 78600 Le Mesnil Le Roi (FR)
(74) Mandataire: Schmit, Christian Norbert Marie

(56) Documents cités:
- EP-A- 0 622 935
- EP-A- 0 665 655
- WO-A-96/24197
- FR-A- 2 760 933

## Description

La présente invention a pour objet un équipement électronique portable muni de fonctions et de modes d'utilisation perfectionnés. Elle concerne tous les équipements électroniques portables, et parmi ceux-ci notamment les organiseurs, les appareils photo électroniques, les dispositifs de jeu portables et au besoin les micro-ordinateurs portables. L'invention peut concerner d'autres appareils de type professionnels moins connus comme les télémètres utilisés par les géomètres, ou des appareils domestiques comme les caméscopes.

La particularité de tous les équipements portables est qu'ils sont munis d'une batterie. Cette batterie est rechargeable soit en place dans l'équipement soit en la plaçant séparément dans un chargeur adapté.

Pour ces appareils portables des fonctions de transmission et plus généralement de télécommunication ont été recherchées. Par exemple on connaît par le document US-A-5 719 936 un organiseur combiné avec un téléphone mobile capable d'utiliser pour sa commande les touches du clavier de l'organiseur. Le combiné (microphone-écouteur) peut se séparer mais la fonction radiotéléphone est inséparable du reste.

D'autres tentatives de combinaisons de ce type ont été imaginées. Elles conduisent à chaque fois à des équipements spécifiques dans lesquels la correspondance mécanique des deux dispositifs, l'équipement électronique portable et le téléphone mobile doit être ajustée et résulte de nombreuses mises au point. Ces nombreuses mises au point sont coûteuses d'une part, et d'autre part sont spécifiques à chaque équipement électronique ainsi perfectionné.

L'invention a pour objet de résoudre les problèmes de coût de développement impliqués par ces mises au point. Elle a également pour objet de résoudre des problèmes spécifiques à l'utilisation des équipements de type divers. En effet les besoins en énergie des différents équipements présentent des particularités inhérentes au système électronique qui les équipe. Par exemple un appareil photographique nécessite au moment de la prise d'un cliché, surtout au moment de l'utilisation d'une lampe flash, une puissance très importante pendant une durée relativement longue, plusieurs dizaines de millisecondes. Un organiseur quant à lui demande globalement une puissance moyenne raisonnable compte tenu que les circuits de mémorisation utilisés comportent des mémoires dynamiques dont la consommation électrique, pratiquement constante, est faible. Les téléphones mobiles quant à eux possèdent une gestion d'énergie propre compatible avec une consommation moyenne entrecoupée de périodes très courtes, de l'ordre de quelques millisecondes, pendant lesquelles la puissance consommée est plus importante. Le but de l'invention est aussi de résoudre des problèmes de consommation d'énergie liés à l'existence d'appareils mixtes incorporant deux fonctions de type différent.

La solution de l'invention comporte essentiellement la réalisation, dans un boîtier batterie pour un équipement électronique, d'une batterie qui comporte dans ce même boîtier batterie un émetteur récepteur de radiotéléphonie mobile, typiquement un émetteur récepteur de communications radio mobile GSM encore que tous les autres protocoles soient acceptables. Le principe de l'invention revient à fabriquer un boîtier batterie universel, adaptable sur tous les équipements électroniques et connectable indifféremment à l'un quelconque de ces équipements. Ce boîtier batterie muni d'un émetteur récepteur de communications radio mobile est au même format qu'un boîtier batterie simple utilisable par ailleurs avec tous les équipements. En fait le format peut être différent en épaisseur, parce que la fonction radiotéléphone occupe un certain volume et qu'il y a intérêt à augmenter le volume du boîtier batterie universel pour que l'autonomie ne chute pas en supportant deux fonctions au lieu d'une seule.

Dans ces conditions un utilisateur peut acquérir soit un boîtier de batterie simple soit, lorsque ses besoins évoluent, acquérir un boîtier de batterie muni de l'émetteur récepteur de communications radio mobile pour adjoindre une facilité de transmission à son équipement. Un dispositif propre à la gestion de l'énergie de l'équipement est alors incorporé dans une interface entre le boîtier amovible de batterie et un boîtier de base de l'équipement pour permettre de disposer d'une information complète, dans le boîtier de base ou dans le boîtier de batterie, sur un mode de consommation recherché de l'énergie.

L'invention a donc pour objet un équipement électronique portable ayant, pour un utilisateur, une utilisation propre c'est-à-dire pouvant fonctionner d'une manière autonome, comportant dans un boîtier de base un premier microprocesseur, un bus, au moins un périphérique relié par ce bus à ce premier microprocesseur, et comportant par ailleurs une batterie amovible contenue dans un boîtier amovible de batterie, le boîtier amovible de la batterie comportant un jeu de circuits muni d'un émetteur récepteur radiofréquence capable de mettre en oeuvre une communication radio mobile, caractérisé en ce qu'il comporte
- une interface standardisée avec le boîtier de base pour mettre cet émetteur récepteur en relation avec le premier microprocesseur,
- un circuit de gestion de l'énergie incorporé dans l'interface entre le boîtier de base et le boîtier amovible,
- le fonctionnement de ce circuit de gestion d'énergie étant basé sur l'état de connexion entre le boîtier de base et le boîtier amovible,
- ce circuit de gestion d'énergie possédant deux modes, un mode de fonctionnement autonome, et au moins un autre mode lorsque le boîtier amovible comportant l'émetteur récepteur est connecté à l'équipement électronique portable.

L'invention sera mieux comprise à la lecture de la description qui suit et à l'examen de la figure qui l'accompagne. Celles-ci ne sont présentées qu'à titre indicatif et nullement limitatif de l'invention. La figure montre :

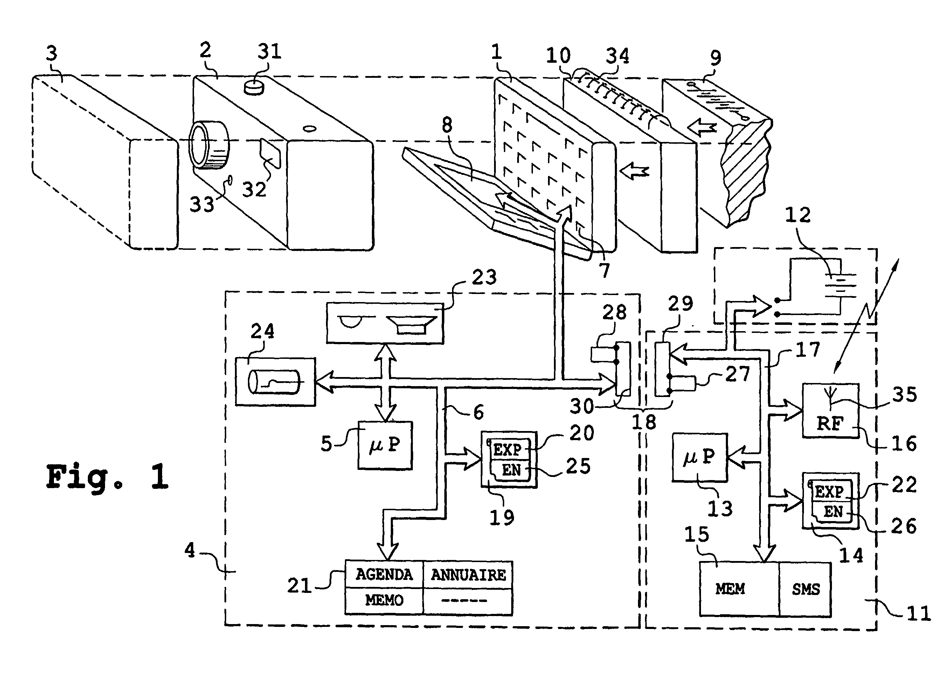

- Figure 1 : la représentation schématique d'un équipement électronique portable conforme à l'invention.

La figure 1 montre un équipement électronique portable selon l'invention. Cet équipement peut comporter un organiseur 1, ou un appareil photographique électronique 2 ou tout autre appareil électronique 3. L'équipement électronique comporte à cet effet, dans un boîtier de base 4, un premier microprocesseur 5 relié par un bus 6 de données d'adresses et de commandes à au moins un périphérique, par exemple ici le clavier 7 ou l'écran 8 de l'organiseur 1. L'équipement comporte également une batterie amovible 9 contenue dans un boîtier de batterie. L'invention est principalement caractérisée en ce que le boîtier de batterie 9 est remplacé par un boîtier de batterie plus complet 10 comportant un jeu 11 de circuits, ici de circuits intégrés, en plus d'une batterie 12 incorporée dans le même boîtier 10. Le jeu 11 de circuits intégrés comporte au moins un deuxième microprocesseur 13 utilisable pour mettre en oeuvre une communication radio mobile. A cet effet le jeu 11 comporte d'autres circuits notamment une mémoire programme 14, une mémoire de données 15, et des circuits d'émission réception 16, ces derniers pouvant ne pas être en totalité intégrés et comportant par ailleurs une antenne de rayonnement. Ces circuits du boîtier 10 sont reliés entre eux par un bus 17 du même type que le bus 6. Dans le boîtier 10, la batterie 12 est incorporée mais est néanmoins démontable. Elle n'est pas normalement amovible de ce boîtier 10 mais elle peut être remplacée, notamment en usine, son montage dans le boîtier 10 n'étant pas irréversible.

Le jeu 11 de circuits du boîtier de batterie et les circuits du boîtier de base 4 sont reliés à une interface standardisée 18 pour mettre en relation le bus 6 avec le bus 17. L'interface 18, comportant typiquement un lien série rapide, est standardisé tant sur le plan mécanique que sur le plan fonctionnel. Sur le plan mécanique par ailleurs le boîtier 10 est prévu pour occuper une place dans le boîtier de base 4 et posséder des systèmes d'accrochage avec ce boîtier de base 4 identiques à ceux de la batterie 9. Quand le boîtier 10 est en place, la batterie 12 sert à alimenter le boîtier de base 4. L'interface 18 est standardisée au sens qu'on peut aussi bien placer une batterie ordinaire 9 sur l'appareil qu'une batterie de radio communication mobile 10. L'interface 18 peut aussi être standardisée au sens que les batteries 9 ou 10 peuvent se placer sur des appareils différents.

Si la batterie 9 est connectée à l'organiseur 1 ou à l'appareil photographique 2 ou à l'équipement 3, ceux-ci peuvent fonctionner d'une manière autonome et connue dans l'état de la technique. Si par contre cette batterie 9 est remplacée, pour chacun de ces appareils, par le boîtier de batterie selon l'invention 10, une fonction de transmission est ajoutée à ces équipements. Par exemple dans le cas où l'équipement est un organiseur 1, une mémoire programme 19 du boîtier 4, reliée au bus 6, peut comporter un système d'exploitation 20 pour gérer un agenda, un annuaire, ou une zone de mémorisation contenus dans une mémoire de données 21 reliée également au bus 6. Dans le cadre de la liaison de l'organiseur 1 au téléphone mobile constitué par le jeu 11, la mise à jour de la mémoire 21 peut être réalisée notamment par l'émission et la réception de messages de type SMS (Short Message Service - Service de messages courts). La réception de tels messages de type SMS, stockés dans la mémoire 15 du jeu 11 est exécutée d'une manière connue sous le commandement d'un système d'exploitation 22 mémorisé dans la mémoire programme 14.

Le fonctionnement des appareils peut être indépendant. Ainsi le boîtier 10, lorsqu'il est déconnecté de l'organiseur 1 peut recevoir les messages de type SMS qui se stockent dans sa mémoire 15. Au moment de la connexion du boîtier 10 sur l'organiseur 1 la mise à jour de la mémoire 21 est entreprise de même qu'éventuellement l'émission de messages de type SMS renseignant un agenda tenu à distance sur les modifications de l'agenda 21.

Dans le cas où l'équipement comporte un appareil photographique 2, la liaison avec le boîtier 10 de téléphonie mobile peut servir à organiser le transfert de photographies électroniques prélevées avec l'appareil photographique 2. Dans ce cas, l'adresse de destination des fichiers représentant ces photographies électroniques pourra avoir été introduite préalablement par connexion du boîtier 10 au boîtier 1, et par programmation à l'aide du clavier 7, dans la mémoire 15, d'une adresse de destination d'un site, par exemple d'un site Internet, où ces fichiers photographiques doivent être transférés. L'adresse de destination peut aussi avoir été chargée dans la mémoire 15 par une transmission radio (avec un signal SMS particulier de commande) depuis le site destinataire.

L'avantage d'utiliser une transmission associée à un appareil photographique 2 est lié à l'exiguïté de la mémoire de cet appareil 2. Cette transmission permet de se dispenser d'avoir à placer des supports de stockage vierges quand les supports de stockage en place sont pleins. La transmission peut dans ce cas être associée avec une libération d'espace mémoire. Cette transmission assure aussi que les photographies prises ne soient pas perdues si l'appareil photo est perdu ou endommagé. Cette transmission permet également de traiter immédiatement les photos dans le site destinataire pour vérifier leur exploitabilité et réagir au besoin par des indications en retour (par messages SMS s'affichant dans le viseur par exemple).

Dans le cas où l'équipement 3 est un jeu, notamment une console de jeux vidéo, le boîtier 10 peut servir à établir un caractère interactif de commandes lancées avec le jeu 3 avec des actions effectuées sur un site distant. On peut notamment de cette façon imaginer le développement de boîtiers 3 utilisables pour diffuser des jeux de type loterie dans une grande région, par exemple à l'échelle d'un pays. Dans ce cadre de jeux communicants le mode de transmission par SMS est particulièrement adapté pour des transmissions de commandes d'interactions (car elles sont brèves). Pour le téléchargement de jeux, la transmission de données en mode circuit peut être préférable au SMS si les fichiers sont longs. La transmission en mode paquet GPRS (General Packet Radio System-Système général de transmission radioélectrique de paquets), quand elle est disponible, convient aux deux.

A titre de périphérique supplémentaire, le boîtier de base 1 peut comporter un circuit audio 23 relié au bus 6 et comportant notamment un microphone, un haut-parleur et un vocodeur (de préférence ici de type Internet, à la norme G723 par exemple). Il est ainsi et surtout possible à l'utilisateur de l'organiseur 1 d'obtenir une fonction de téléphonie, via la radio communication, avec des correspondants sur un réseau cellulaire, ou filaire, ou sur le réseau Internet.

Il est également possible à l'utilisateur de l'organiseur 1 de mémoriser dans la mémoire 21 (qui peut être assez importante) des messages que cet utilisateur aura dictés ou, dans un mode de connexion avec le jeu 11, des images prélevées sur le réseau Internet et des sons associés à ces images. Plutôt que d'avoir le circuit audio 23 directement connecté dans le boîtier 1 de l'organiseur, le bus 6 pourra être relié à un convertisseur analogique numérique relié à un connecteur 24, notamment de type jack, acceptant un microphone et un haut-parleur déporté. Dans ce cas la numérisation et le codage de la parole peuvent aussi être effectués par le microprocesseur 5 sous le contrôle du système d'exploitation 20.

Comme indiqué ci-dessus la gestion d'énergie est un problème spécifique à chaque équipement et naturellement les mémoires programme 19 des équipements 1 comportent des sous-programmes 25 de gestion de l'énergie électrique dispensée par la batterie 9 dans le boîtier de base 4. D'une manière comparable la mémoire programme 14 du boîtier 10 comportera des sous-programmes 26 de gestion d'énergie. Cependant dans l'invention, la gestion de l'énergie dans le programme 25 ou 26 tiendra compte de l'existence de la connexion ou non du boîtier de batterie 10 au boîtier de base 1. La gestion de l'énergie régit un mode de priorité de certaines fonctions en cas de batterie bientôt déchargée, et la coupure ou le ralentissement de certains circuits quand ils ne sont pas nécessaires. Deux situations sont alors à envisager.

Premièrement les deux boîtiers ne sont pas connectés, le boîtier 4 est alors alimenté par une batterie 9 classique alors que le jeu 11 est alimenté seul par la batterie 12. Dans ce cas les gestions d'énergie 25 et 26 sont des gestions de type autonome, fonctionnant selon des critères propres et d'une manière connue en soi. Dans ce cas, le boîtier 10 peut être placé seul sur un chargeur électrique pour le rechargement de la batterie 12. De préférence la fonction radio communication mobile sera maintenue au cours de ce rechargement pour que le boîtier 10 puisse recevoir des messages SMS.

Dans l'autre cas, les deux boîtiers 4 et 10 sont connectés l'un à l'autre. Dans ce cas, l'interface 18 permet de reconnaître cette connexion. Soit un des microprocesseurs, 5 ou 13, interroge l'autre par l'intermédiaire de l'interface 18 pour connaître l'état de connexion. Au besoin l'interface 18 elle-même comporte un circuit de codage pour renseigner mutuellement sur l'état de connexion. Par exemple ce circuit de codage, symboliquement représenté ici, peut prendre la forme d'un court-circuit 27 ou 28 établi entre certaines des broches de connecteurs respectivement 29 et 30 appelées à coopérer dans l'interface 18. Le système d'exploitation 20 mis en oeuvre par le microprocesseur 5 sait aller tester l'existence du circuit de codage 27 de même que le microprocesseur 13 sait aller tester l'existence du circuit de codage 28. Plus généralement, un circuit de codage selon l'invention produit un signal de réponse à une interrogation d'un microprocesseur, 5 ou 13. A ce titre les microprocesseurs 13 ou 5 respectivement peuvent aussi comporter des moyens pour jouer ce rôle de circuit de codage.

Bien entendu d'un équipement, un organiseur 1, à un autre, un appareil photographique 2, le circuit de codage 28 produira une réponse différente de telle façon que l'adaptation du boîtier universel 10 avec son jeu 11 de circuits soit automatique. Ainsi par exemple, dans le cas où l'appareil photographique 2 est connecté au circuit 11, la reconnaissance du circuit de codage 28 provoquera d'une part par le système d'exploitation 22 l'émission des photographies de la mémoire de cet appareil photographique 2 vers un site préalablement désigné et provoquera d'autre part avec le circuit de gestion de l'énergie 26 un mode d'utilisation particulier de la batterie 12.

Par exemple un tel mode de gestion particulier de l'énergie peut être lié à une action externe exercée par un opérateur sur un levier de déclenchement 31 de l'appareil photographique 2. Selon un paramétrage préalable, on peut choisir de favoriser toutes les interventions humaines au détriment des actions automatiques (ou l'inverse). Dans ce cas, l'appui sur la touche 31, outre qu'elle conduira à la prise du cliché de photographie électronique, avec ou sans utilisation d'une lampe flash 32 et d'un télémètre 33, pourra provoquer la mise en sommeil des fonctions de radio communication mobile du boîtier 10 au réseau de téléphonie mobile.

A l'inverse, la réception d'un message de type SMS ou l'émission automatique d'un fichier pourra conduire à une interdiction temporaire d'utilisation de la fonction de prise de vue (déclenchée par le bouton 31), tant que la transmission du fichier n'est pas achevée.

La particularité de l'invention se situe donc dans le fait que le système d'exploitation 22 et en particulier le système de gestion de l'énergie 26 du téléphone mobile 11 possèdent deux modes, un mode en fonctionnement autonome, et au moins un autre mode lorsqu'il est connecté à un équipement électronique, un organiseur, un appareil photographique ou autres. Cet autre mode comporte lui-même des possibilités d'endormissement d'une partie ou l'autre de l'équipement. Cet endormissement peut y résulter au choix d'une action positive de l'opérateur ou d'un événement extérieur.

En résumé l'équipement comporte un circuit 26 de gestion d'énergie pour, à la demande ou sur la survenance d'un événement, endormir tout ou partie des fonctions exécutées par le premier microprocesseur 5 ou le deuxième microprocesseur 13, ou organiser leurs priorités.

Dans le cadre de l'utilisation de l'organiseur 1 muni d'un circuit audio 23, bien entendu l'organiseur 1 peut se transformer en un téléphone mobile classique. Le bus 6 relié au bus 17 autorise un fonctionnement complet. Dans le cas où le vocodeur GSM est mis en oeuvre par le boîtier 10, l'interface 18 comporte une voie analogique pour transmettre les signaux analogiques depuis le circuit audio 23 ou le jack 24. Typiquement dans un appareil de radio communication mobile GSM il y a une partie radiofréquence RF, un puissant composant 16 (ou un ensemble de composants, incorporant un processeur de traitement de signal et des mémoires) traitant la bande de base et le protocole GSM et le vocodage GSM. Enfin il y a un microprocesseur 13 qui s'occupe des applications et de la relation homme machine. Dans ce cas, on pourra utiliser le vocodeur GSM du circuit 16, et s'abstenir d'avoir un vocodeur avec le système d'exploitation 20 ou dans le circuit 23 (les vocodeurs pour d'autres usages, tels que G723 pour la téléphonie sur Internet, restant dans 20 ou 23).

Alors que le boîtier 10 de batterie comprend principalement l'équipement radioélectrique, les traitements de bande de base, le protocole GSM et une partie de la gestion d'énergie, l'autre équipement électronique, l'organiseur 1, comprend les microphones, les écouteurs, les vocodeurs, l'écran le clavier et en outre toutes les utilisations non communicantes c'est à dire calculette, horloge etc. Le boîtier 10 peut en outre contenir des moyens d'une liaison de type DECT et des moyens de capter des émissions radiophoniques publiques en modulation de fréquence. Dans ce cas, la relation homme machine correspondant à ces utilisations est assurée par l'organiseur 1.

La forme du boîtier 10, dans les parties de ce boîtier 10 non au contact du boîtier 4, pourra comporter des reliefs propres à sa fonction. Notamment le boîtier 10 pourra comporter une protubérance 34 pour contenir une antenne 35 du circuit 16. Cette antenne peut par ailleurs dépasser et ou être escamotable. De cette façon le rayonnement radioélectrique du téléphone mobile sera amélioré. Le boîtier 10 peut aussi comporter une surépaisseur ou des débordements latéraux pour loger les circuits du jeu 11 et une capacité de batterie augmentée. Par ailleurs, à l'endroit de l'interface mécanique entre les deux boîtiers des surfaces métallisées seront prévues pour blinder mutuellement les appareils.

Certains organiseurs peuvent par ailleurs être muni d'un détecteur de caméra, ou être connecté à une telle caméra. De cette façon une utilisation de visiophonie est envisageable. Dans celle-ci, l'écran de l'organiseur sert pour montrer les images. Les messages, ainsi que les images captées par la caméra sont transmis par un mode de données, radio data, typiquement le mode GPRS.

## Revendications

1. Equipement électronique portable ayant, pour un utilisateur, une utilisation (1, 2, 3) propre c'est-à-dire pouvant fonctionner d'une manière autonome, comportant dans un boîtier (4) de base un premier microprocesseur (5), un bus (6), au moins un périphérique (7, 8) relié par ce bus à ce premier microprocesseur, et comportant par ailleurs une batterie (9) amovible contenue dans un boîtier amovible de batterie, le boîtier (10) amovible de la batterie (12) comportant un jeu (11) de circuits (13-15) muni d'un émetteur récepteur (16) radiofréquence capable de mettre en oeuvre une communication radio mobile, **caractérisé en ce qu'**il comporte
- une interface (18) standardisée avec le boîtier de base pour mettre cet émetteur récepteur en relation avec le premier microprocesseur,
- un circuit de gestion (26) de l'énergie incorporé dans l'interface entre le boîtier de base et le boîtier amovible,
- le fonctionnement de ce circuit de gestion d'énergie étant basé sur l'état de connexion entre le boîtier de base et le boîtier amovible,
- ce circuit de gestion d'énergie possédant deux modes, un mode de fonctionnement autonome, et au moins un autre mode lorsque le boîtier amovible comportant l'émetteur récepteur est connecté à l'équipement électronique portable.

2. Equipement selon la revendication 1, **caractérisé en ce que** le jeu de circuits est intégré et comporte un deuxième microprocesseur (13), un bus (17), un jeu de mémoires programmes (14) et de données (15) reliées par ce bus à ce deuxième microprocesseur.

3. Equipement selon l'une des revendications 1 à 2, **caractérisé en ce que** le circuit de gestion d'énergie est prévu pour organiser des priorités de fonctions exécutées par le premier microprocesseur ou le deuxième microprocesseur et pour endormir en conséquence des fonctions exécutées par le premier microprocesseur ou le deuxième microprocesseur.

4. Equipement selon l'une des revendications 1 à 3, **caractérisé en ce que** le circuit de gestion d'énergie intervient à la demande ou sur la survenance d'un événement.

5. Equipement selon l'une des revendications 1 à 4, **caractérisé en ce que** le circuit de gestion d'énergie comporte des moyens pour modifier des critères de gestion en fonction de la connexion ou non du boîtier de batterie au boîtier de base.

6. Equipement selon l'une des revendications 1 à 5, **caractérisé en ce que** le boîtier de batterie comporte une protubérance (34) pour améliorer le rendement d'une antenne (35).

7. Equipement selon l'une des revendications 1 à 6, **caractérisé en ce que** le boîtier de base comporte un écran (2), un clavier (7), un microphone (23), et un haut-parleur (23), ou des moyens (24) pour connecter l'équipement à un microphone et à un haut-parleur.

8. Equipement selon l'une des revendications 1 à 7, **caractérisé en ce qu'**il comporte un circuit (27, 28) de codage correspondant à une utilisation de l'équipement.

9. Equipement selon l'une des revendications 1 à 8, **caractérisé en ce qu'**il est du type organiseur personnel, ou agenda électronique, ou annuaire électronique, ou mémoire électronique, ou appareil photographique ou console de jeux,

10. Ensemble d'équipements selon l'une des revendications 1 à 9, utilisables alternativement, **caractérisé en ce qu'**il comporte plusieurs boîtiers de base différents, ces boîtiers comportant un appareil photographique (2) ou un organiseur (1) personnel ou une console (3) de jeu, et **en ce qu'**un même boîtier de batterie est mécaniquement et fonctionnellement compatible avec chacun de ces boîtiers de base différents.

## Claims

1. Portable electronic equipment having a use (1, 2, 3) which is personal to a user, i.e. capable of operating independently, comprising in a base unit (4) a first microprocessor (5), a bus (6), at least one peripheral (7, 8) connected by this bus to this first microprocessor, and also comprising a detachable battery (9) contained in a detachable battery unit, the detachable unit (10) for the battery (12) comprising a set (11) of circuits (13-15) equipped with a radio frequency transmitter-receiver (16) capable of using mobile radio communications, ***characterised in that*** it comprises
- an interface (18) which is standardised with the base unit in order to connect this transmitter-receiver with the first microprocessor,
- a power management circuit (26) incorporated in the interface between the base unit and the detachable unit,
- the operation of this power management circuit being based on the state of connection between the base unit and the detachable unit,
- this power management circuit having two modes, an independent mode of operation, and at least one other mode when the detachable unit comprising the transmitter-receiver is connected to the portable electronic equipment.

2. Equipment according to claim 1, ***characterised in that*** the set of circuits is integrated and comprises a second microprocessor (13), a bus (17), a set of memories for programmes (14) and data (15) connected by this bus to this second microprocessor.

3. Equipment according to one of claims 1 to 2, ***characterised in that*** the power management circuit is designed to organise priorities of functions executed by the first microprocessor or the second microprocessor and to put functions executed by the first microprocessor or the second microprocessor to sleep accordingly.

4. Equipment according to one of claims 1 to 3, ***characterised in that*** the power management circuit intervenes when requested or when an event occurs.

5. Equipment according to one of claims 1 to 4, ***characterised in that*** the power management circuit comprises means for modifying management criteria according to whether the battery unit is or is not connected to the base unit.

6. Equipment according to one of claims 1 to 5, ***characterised in that*** the battery unit comprises a protuberance (34) for improving the efficiency of an antenna (35).

7. Equipment according to one of claims 1 to 6, ***characterised in that*** the base unit comprises a screen (2), a key pad (7), a microphone (23), and a loudspeaker (23), or means (24) for connecting the equipment to a microphone and to a loudspeaker.

8. Equipment according to one of claims 1 to 7, ***characterised in that*** it comprises a coding circuit (27, 28) corresponding to a use of the equipment.

9. Equipment according to one of claims 1 to 8, ***characterised in that*** it is of the personal organiser, or electronic diary, or electronic directory, or electronic memory, or photographic apparatus or games console type.

10. Set of equipment according to one of claims 1 to 9, useable alternatively, ***characterised in that*** it comprises a plurality of different base units, these units comprising a photographic apparatus (2) or a personal organiser (1) or a games console (3), and **in that** the same battery unit is mechanically and functionally compatible with each of these different base units.

## Patentansprüche

1. Tragbares elektronisches Gerät mit einer für einen Benutzer eigenen Verwendung (1, 2, 3), d.h., das eigenständig funktionieren kann, mit einem ersten Mikroprozessor (5) in einem Grundgehäuse (4), einem Bus (6), mindestens einem durch diesen Bus. mit diesem ersten Mikroprozessor verbundenen Peripheriegerät (7, 8) und femer mit einer lösbaren, in einem lösbaren Batteriegehäuse enthaltenen Batterie (9), wobei das lösbare Gehäuse (10) der Batterie (12) einen Satz (11) von Schaltungen (13-15) enthält, welcher mit einem Radiofrequenz-Sender-Empfänger (16) versehen ist, welcher in der Lage ist, eine mobile Funkkommunikation zu bewerkstelligen, **dadurch gekennzeichnet, dass** es Folgendes enthält:
- eine standardisierte Schnittstelle (18) zum Grundgehäuse zur Verbindung des Sender-Empfängers mit dem ersten Mikroprozessor;
- eine Schaltung zum Energie-Management (26), welche in der Schnittstelle zwischen dem Grundgehäuse und dem lösbaren Gehäuse eingebaut ist;
- die Funktionsweise dieser Schaltung zum Energie-Management ist abhängig vom Zustand des Anschlusses zwischen dem Grundgehäuse und dem lösbaren Gehäuse;
- diese Schaltung zum Energie-Management weist zwei Modi auf - einen autonomen Funktionsmodus und mindestens einen weiteren Modus, wenn das lösbare Gehäuse mit dem Sender-Empfänger an das tragbare elektronische Gerät angeschlossen ist.

2. Gerät nach Anspruch 1, **dadurch gekennzeichnet, dass** der Schaltungssatz integriert ist und einen zweiten Mikroprozessor (13), einen Bus (17), einen Satz von Speichern für Programme (14) und für Daten (15) aufweist, welche durch diesen Bus mit diesem zweiten Mikroprozessor verbunden sind.

3. Gerät nach einem der Ansprüche 1 bis 2, **dadurch gekennzeichnet, dass** die Schaltung zum Energie-Management vorgesehen ist, um Prioritäten von Funktionen zu organisieren, welche von dem ersten Mikroprozessor oder von dem zweiten Mikroprozessor durchgeführt werden, und um entsprechend Funktionen zum Schlafen zu bringen, welche von dem ersten oder von dem zweiten Mikroprozessor durchgeführt werden.

4. Gerät nach einem der Ansprüche 1 bis 3, **dadurch gekennzeichnet, dass** die Schaltung zum Energie-Management auf Anfrage oder auf das Auftreten eines Ereignisses hin eingreift.

5. Gerät nach einem der Ansprüche 1 bis 4, **dadurch gekennzeichnet, dass** die Schaltung zum Energie-Management Mittel aufweist, um Managementkriterien in Abhängigkeit des Anschlusses oder des Nicht-Anschlusses des Batteriegehäuses an das Grundgehäuse zu modifizieren.

6. Gerät nach einem der Ansprüche 1 bis 5, **dadurch gekennzeichnet, dass** das Batteriegehäuse einen Vorsprung (34) zur Verbesserung des Wirkungsgrads einer Antenne (35) aufweist.

7. Gerät nach einem der Ansprüche 1 bis 6, **dadurch gekennzeichnet, dass** das Grundgehäuse einen Bildschirm (2), eine Tastatur (7), ein Mikrophon (23) und einen Lautsprecher (23) oder Mittel zum Anschließen des Geräts an ein Mikrophon und an einen Lautsprecher aufweist.

8. Gerät nach einem der Ansprüche 1 bis 7, **dadurch gekennzeichnet, dass** es eine Kodierschaltung (27, 28) entsprechend der Verwendung des Geräts aufweist.

9. Gerät nach einem der Ansprüche 1 bis 8, **dadurch gekennzeichnet, dass** es sich um ein Gerät des Typs Personal Organizer oder elektronische Agenda oder elektronisches Telefonbuch oder elektronischer Speicher oder Fotoapparat oder Spielkonsole handelt.

10. Mehrzahl von Geräten nach einem der Ansprüche 1 bis 9, **dadurch gekennzeichnet, dass** sie mehrere unterschiedliche Grundgehäuse aufweist, wobei diese Gehäuse einen Fotoapparat (2) oder einen Personal Organizer (1) oder eine Spielkonsole (3) enthalten, und dass ein und dasselbe Batteriegehäuse mechanisch und funktionell kompatibel mit jedem dieser unterschiedlichen Grundgehäuse ist.
